# FASCICULE DE BREVET EUROPEEN

(11) **EP 2 273 155 B1**
(45) Date de publication et mention de la délivrance du brevet: **27.11.2013**
(21) Numéro de dépôt: 10168376.1
(22) Date de dépôt: 02.07.2010
(51) Int. Cl.: A01D 69/06, F16H 15/10, A01B 33/08

(54) **Boîte de transmission pour équipement automoteur de débroussaillage et équipement automoteur de débroussaillage comprenant une telle boîte de transmission**
Getriebe für eine selbstfahrende Ackerfräse und Ackerfräse mit entsprechendem Getriebe
Transmission for a self-propelled tiller and tiller with a respective transmission

(30) Priorité: 07.07.2009 FR 0954683
(43) Date de publication de la demande: 12.01.2011
(73) Titulaire: PUBERT HENRI SAS, 85110 Chantonnay (FR)
(72) Inventeur: Gerbaud, Nicolas, 85110, MONSIREIGNE (FR); Willien, Nicolas, 39230, SELLIERES (FR); Herbreteau, Samuel, 49300, CHOLET (FR); Lejeune, Pierre, 50700, MORVILLE (FR)
(74) Mandataire: Bioret, Ludovic

(56) Documents cités:
- CH-A- 94 340
- DE-C- 55 629
- FR-A- 2 703 876
- US-A- 5 353 578
- US-A1- 2008 110 689

## Description

### 1. Domaine technique de l'invention

L'invention concerne les transmissions pour équipements de débroussaillage, en particulier les transmissions pour équipements à conducteur marchant, tels que connus de FR 2 703 876. L'invention concerne également les équipements automoteurs de débroussaillage équipés de boîtes de transmission.

### 2. Arrière-plan technologique

Un équipement automoteur de débroussaillage comprend un moteur, des moyens d'entraînement de l'équipement sur une surface à débroussailler, des outils de coupe de débroussaillage et une boîte de transmission agencée entre le moteur et les moyens d'entraînement de l'équipement sur la surface à débroussailler. Il existe un grand nombre d'équipements de motoculture de débroussaillage dont le choix dépend notamment de la surface à débroussailler et du type de végétaux à débroussailler.

Les équipements les plus perfectionnés comprennent des boîtes de transmission comprenant plusieurs vitesses pour adapter l'allure de l'équipement à la surface à débroussailler.

Certains équipements disposent en outre d'une marche arrière pour faciliter les manoeuvres, par exemple au voisinage d'un obstacle, telle qu'une clôture, un arbre, etc, et d'un mécanisme de débrayage pour faciliter le changement d'allure et le passage de la marche avant à la marche arrière.

Les boîtes de transmission de tels équipements de motoculture mettent en oeuvre un grand nombre de pièces mécaniques complexes, ce qui en font des boîtes onéreuses, lourdes et encombrantes.

En outre, chaque type d'équipement de motoculture de débroussaillage est pourvu, selon les fonctionnalités qui lui sont conférées -vitesse unique, plusieurs vitesses, marche arrière, frein, etc.- d'une boite de transmission spécifique. Ainsi, à chaque nouvelle gamme de produit, l'industriel doit développer une nouvelle boite de transmission qui permet de répondre aux spécifications techniques de ce produit. La fabrication des moules, notamment des carters de boîte est une opération longue, onéreuse et délicate. En outre, une fois le moule réalisé, l'ajout de toute nouvelle fonctionnalité liée à la transmission est impossible sauf à refaire un moule.

### 3. Objectifs de l'invention

Dès lors, l'invention vise à pallier au moins certains des inconvénients des boîtes de transmission de l'état de la technique.

En particulier, l'invention vise à fournir, dans au moins un mode de réalisation, une boîte de transmission modulaire qui peut être configurée de manière à pouvoir être utilisée avec différents équipements automoteurs de débroussaillage, indépendamment de leurs spécifications.

L'invention vise aussi à fournir, dans au moins un mode de réalisation, une boîte de transmission évolutive qui peut recevoir des fonctionnalités nouvelles pour mettre à niveau des équipements de débroussaillage antérieurs sur lesquels elle est montée.

L'invention vise aussi à fournir, dans au moins un mode de réalisation, une boîte de transmission économique à fabriquer.

L'invention vise aussi à fournir, dans au moins un mode de réalisation, une boîte de transmission qui permet une maintenance aisée.

L'invention vise aussi à fournir, dans au moins un mode de réalisation, une boîte de transmission dont le démontage et la réparation sont aisés.

L'invention vise aussi à fournir, dans au moins un mode de réalisation, une boîte de transmission compacte.

L'invention vise aussi à fournir, dans au moins un mode de réalisation, une boîte de transmission qui présente un nombre réduit de pièces.

L'invention vise aussi à fournir, dans au moins un mode de réalisation, une boîte de transmission qui permet de sécuriser le équipement de débroussaillage sur lequel la boîte est montée.

### 4. Exposé de l'invention

Pour ce faire, l'invention concerne une boîte de transmission pour équipement automoteur de débroussaillage comprenant des moyens d'entraînement de l'équipement sur une surface à débroussailler, ladite boîte de transmission comprenant :
- un carter coopérant avec une poulie adaptée pour être entraînée en rotation par des moyens moteurs,
- un arbre d'entrée adapté pour être entraîné en rotation par lesdits moyens moteurs,
- un arbre de sortie,
- des moyens d'engrènement agencés entre l'arbre d'entrée et l'arbre de sortie de sorte qu'une rotation de l'arbre d'entrée engendre une rotation de l'arbre de sortie.

La boîte de transmission selon l'invention est **caractérisée en ce que** ladite poulie est montée pivotante par rapport au carter selon un axe diamétral de la poulie et en ce que ledit carter est formé de deux demi-coques, dites respectivement demi-coque inférieure et demi-coque supérieure, agencées en regard l'une de l'autre et définissant un logement de réception de l'arbre d'entrée, ledit logement de réception présentant une forme et des dimensions conformées et conjuguées à la forme et aux dimensions d'au moins trois configurations distinctes de l'arbre d' entrée :
- une configuration dans laquelle l'arbre d'entrée est équipé d'un disque d'entraînement de marche avant,
- une configuration dans laquelle l'arbre d'entrée est équipé d'un disque d'entraînement de marche avant et d'un variateur de vitesses,
- une configuration dans laquelle l'arbre d'entrée est équipé d'un disque d'entraînement de marche avant et d'un disque d'entraînement de marche arrière.

Une boîte de transmission selon l'invention présente donc deux demi-coques définissant un logement de réception de l'arbre d'entrée présentant une forme et des dimensions conformées et conjuguées à la forme et aux dimensions de l'arbre d'entrée équipé indifféremment d'un disque de marche avant et/ou d'un disque de marche arrière et/ou d'un variateur de vitesses.

Un carter d'une boîte de transmission selon l'invention peut donc recevoir une grande variété d'organes de transmission. En particulier, une boîte de transmission selon l'invention peut comprendre un arbre d'entrée équipé d'un disque de marche avant pour doter l'équipement sur lequel la boîte est montée d'une fonctionnalité de marche avant. En outre, une boîte de transmission selon l'invention peut comprendre un arbre d'entrée équipé d'un disque de marche avant et d'un variateur de vitesses pour doter l'équipement sur lequel la boîte est montée de plusieurs vitesses en marche avant. En outre, la boîte de transmission selon l'invention peut comprendre un arbre d'entrée équipé d'un disque de marche arrière pour doter l'équipement sur lequel la boîte est montée d'une marche arrière.

Selon l'invention, le carter est formé de demi-coques définissant un logement de réception de l'arbre d'entrée, ce dernier pouvant être équipé d'un disque de marche avant, d'un disque de marche arrière ou d'un variateur de vitesses. Ainsi, avec le même carter de boîte, il est possible de fabriquer une grande variété de transmissions. Il est donc possible de fabriquer les carters en grand nombre et de définir ultérieurement les fonctionnalités de l'équipement de débroussaillage sur lequel la boîte est montée.

En outre, le logement de réception permet de recevoir différentes configurations de l'arbre d'entrée sans néanmoins imposer une modification des autres organes de la boîte de transmission. En particulier, l'arbre de sortie et les moyens d'engrènement n'ont pas à subir la moindre modification de structure, de forme, ou d'agencement au sein de la boîte, pour permettre un changement de confguration de l'arbre d'entrée.

En outre, le carter d'un boîtier selon l'invention étant formé de deux demi-coques, il est particulièrement aisé d'accéder à l'intérieur de la boîte en démontant la demi-coque supérieure pour changer la configuration de l'arbre d'entrée, ou pour remplacer un organe défectueux. La maintenance d'une boîte selon l'invention est donc aisée.

Le logement de réception de l'arbre d'entrée peut également selon une variante de l'invention faire office de logement de réception de l'arbre de sortie, voire des moyens d'engrènements.

Une boîte de transmission selon l'invention est adaptée pour recevoir différentes configurations de l'arbre d'entrée de manière à pouvoir adapter les fonctionnalités de la boîte à différents équipements de débroussaillage sans néanmoins modifier les autres éléments de la boîte.

Avantageusement et selon l'invention, l'arbre de sortie est relié auxdits moyens d'entraînement dudit équipement sur ladite surface à débroussailler.

Une telle boîte de transmission est donc agencée entre les moyens moteurs et les moyens d'entraînement de l'équipement sur la surface à débroussailler, comme les roues du équipement.

Selon une variante avantageuse de l'invention, la boîte comprend un disque d'entraînement de marche avant et un disque d'entraînement de marche arrière montés sur ledit arbre d'entrée, chaque disque d'entraînement étant solidaire en rotation dudit arbre d'entrée et pouvant être entraîné en rotation par l'intermédiaire de la poulie.

Cette variante correspond donc à la configuration de l'arbre d'entrée dans laquelle l'arbre est équipé d'un disque d'entraînement de marche avant et d'un disque d'entraînement de marche arrière.

Selon une variante de l'invention, la demi-coque inférieure présente une ouverture à travers laquelle s'étend une portion périphérique de chaque disque d'entraînement, et la poulie est montée pivotante sous ladite demi-coque inférieure selon un axe diamétral de la poulie, en regard de ladite ouverture, la poulie étant adaptée pour prendre :
- au moins une position, dite position en prise, dans laquelle une joue supérieure de la poulie entraîne en rotation par friction la portion périphérique d'un disque d'entraînement s'étendant à travers ladite ouverture,
- une position, dite position débrayée, dans laquelle la poulie tourne dans le vide.

Cet arrangement forme un embrayage qui peut passer d'une position en prise à une position débrayée. La poulie est entraînée en rotation par l'intermédiaire de moyens moteurs. Ces derniers comprennent par exemple un pignon de sortie de moteur présentant une gorge périphérique dans laquelle est montée une courroie qui relie ce pignon à la poulie de sorte que la rotation du pignon moteur entraîne la rotation de la poulie. Cette poulie, lorsqu'elle est basculée dans une position en prise, entraîne par friction un disque d'entraînement de l'arbre d'entrée. La friction a lieu entre la joue supérieure de la poulie et le contour périphérique du disque. Chaque disque d'entraînement étant solidaire en rotation de l'arbre d'entrée, la mise en rotation d'un disque d'entraînement engendre la rotation de l'arbre d'entrée. Dès lors, dans une position en prise, l'arbre d'entrée est mis en rotation et engendre donc la rotation de l'arbre de sortie relié à l'arbre d'entrée par les moyens d'engrènement. L'arbre de sortie entraîne à son tour les moyens d'entraînement de l'équipement sur la surface à débroussailler, ce qui permet de déplacer l'équipement sur la surface à débroussailler.

Cet embrayage est particulièrement adapté à un équipement de motoculture étant donné qu'il est économique à réaliser, permet un passage de la position débrayée à une position en prise de manière simple et efficace par un basculement relatif entre le carter de boîte et la poulie, et autorise en outre une maintenance aisée de l'embrayage.

Selon une variante avantageuse de l'invention, ladite poulie est montée pivotante sous la demi-coque inférieure de sorte que ladite liaison pivot est agencée entre les disques d'entraînement de marche avant et de marche arrière et elle est adaptée pour présenter deux positions en prise :
- une première position en prise, dite prise avant, dans laquelle elle est basculée sur un premier côté pour pouvoir entraîner en rotation par friction ledit disque d'entraînement de marche avant monté sur l'arbre d'entrée,
- une seconde position en prise, dite prise arrière, dans laquelle elle est basculée sur le côté opposé par rapport à l'axe du pivot, pour pouvoir entraîner en rotation par friction ledit disque d'entraînement de marche arrière monté sur l'arbre d'entrée.

Selon cette variante, la liaison pivot est agencée entre le disque d'entraînement de marche avant et le disque d'entraînement de marche arrière en s'étendant selon un axe diamétral de la poulie. Dès lors, le basculement de la poulie sur un premier côté entraîne la rotation du disque d'entraînement de marche avant dans un premier sens de rotation et le basculement de la poulie sur le côté opposé entraîne la rotation du disque d'entraînement de marche arrière dans un second sens de rotation, opposée au premier sens de rotation, ce qui permet d'entraîner l'arbre d'entrée dans un sens ou dans l'autre selon la position de basculement de la poulie.

Selon une variante avantageuse de l'invention, la boîte de transmission comprend un variateur de vitesses comprenant une couronne solidaire du disque d'entraînement en marche avant et une fourchette radiale s'étendant à travers une ouverture ménagée dans ladite demi-coque supérieure de manière à pouvoir être manoeuvré par un opérateur pour déplacer ledit disque d'entraînement en marche avant le long d'une portion de l'arbre d'entrée.

Un tel variateur de vitesses permet de déplacer le disque d'entraînement en marche avant le long de la joue supérieure de la poulie. Ainsi, lorsque le disque d'entraînement est déplacé vers la périphérie de la joue de la poulie, la vitesse de rotation du disque diminue, alors que lorsque le disque est déplacé vers le centre de la joue de la poulie, la vitesse augmente.

En outre, le déplacement du disque d'entraînement en marche avant le long d'un axe radial de la joue de la poulie permet de faire varier continûment la vitesse de l'arbre d'entrée, ce qui assure une variation continue de la vitesse de déplacement sur la surface à débroussailler de l'équipement de débroussaillage.

En variante ou en combinaison, la boîte de transmission comprend un variateur de vitesses comprenant une couronne solidaire du disque d'entraînement en marche arrière et une fourchette radiale s'étendant à travers une ouverture ménagée dans ladite demi-coque supérieure de manière à pouvoir être manoeuvré par un opérateur pour déplacer ledit disque d'entraînement en marche arrière le long d'une portion de l'arbre d'entrée.

Cela permet également de faire varier la vitesse en marche arrière de l'équipement de débroussaillage.

Selon l'une ou l'autre de ces variantes, la demi-coque supérieure d'un boîtier selon l'invention comprend avantageusement une zone de réception et/ou de guidage d'une gaine portant un câble de commande du variateur de vitesses.

Selon une variante avantageuse de l'invention, le boîtier comprend en outre un levier de frein courbe monté pivotant autour de l'arbre de sortie et s'étendant au-delà de l'arbre d'entrée de sorte à pouvoir occuper :
- une position, dite position freinée, dans laquelle ledit levier est en appui sur ledit disque d'entraînement de marche arrière au niveau de sa courbure de manière à bloquer toute rotation de l'arbre d'entrée,
- une position, dite position libérée, dans laquelle ledit levier est éloigné dudit disque d'entraînement de marche arrière de manière à autoriser une rotation de l'arbre d'entrée.

Ce levier de frein permet dans la position freinée de bloquer la rotation de l'arbre d'entrée par action sur le disque d'entraînement en marche arrière par appui direct sur le disque d'entraînement. De préférence, le disque d'entraînement en marche arrière est revêtu d'une garniture périphérique en caoutchouc ou en matériau EPDM (Éthylène Propylène Diène Monomère) de manière d'une part à améliorer le coefficient d'adhérence de friction entre la poulie et ce disque d'entraînement, et d'autre part à améliorer le coefficient d'adhérence de blocage entre le levier de frein et le disque lorsque le levier de frein appuie sur le disque.

Selon une autre variante de l'invention, le levier de frein est agencé de sorte à bloquer le disque d'entraînement en marche avant dans la position freinée.

Selon une variante avantageuse de l'invention, la boîte comprend une poignée de manoeuvre du levier de frein adaptée pour permettre un déplacement manuel du levier de frein de ladite position freinée à ladite position libérée et inversement.

Avantageusement et selon l'invention, lesdits arbres d'entrée et de sortie sont parallèles.

Cela permet notamment de simplifier l'architecture des moyens d'engrènement. En particulier, selon cette variante, les moyens d'engrènement peuvent par exemple comprendre un pignon denté monté à une extrémité de l'arbre d'entrée et un pignon denté monté à une extrémité de l'arbre de sortie, ces pignons étant reliés l'un à l'autre par l'intermédiaire d'une chaîne qui s'étend dans un plan perpendiculaire à la direction des arbres d'entrée et de sortie.

Cet agencement particulier permet également de ménager les moyens d'engrènement à une extrémité du boîtier de transmission, en particulier, dans un logement d'engrènement isolé du reste du boîtier, dit logement de propreté. Ce logement de propreté est par exemple séparé du logement de réception de l'arbre primaire par une paroi qui présente au moins une ouverture pour le passage de l'arbre d'entrée.

Avantageusement et selon l'invention, ladite demi-coque inférieure présente :
- quatre demi-réceptacles de portées de roulements, associés respectivement à l'un desdits arbres ;
- un logement de propreté destiné à recevoir lesdits moyens d'engrènement, défini par un bord intérieur de ladite demi-coque inférieure, une première demi-cloison s'étendant sensiblement perpendiculairement aux arbres et une portion de fond reliant ladite cloison et ledit bord intérieur,
et ladite demi-coque supérieure présente :
- quatre demi-réceptacles de portées de roulements, associés respectivement à l'un desdits arbres ;
- une seconde demi-cloison complémentaire de ladite première demi-cloison, de façon à fermer ledit logement de propreté.

Les demi-coques du carter selon l'invention peuvent être fabriquées en tous types de matériaux. En particulier, les demi-coques peuvent être réalisées en aluminium, en aluminium injecté haute pression, en plastique injecté, par rotomoulage en polyéthylène, etc.

Avantageusement et selon l'invention, les demi-coques sont en plastique injecté. Une boîte de transmission selon cette variante est légère, peu coûteuse à fabriquer, et néanmoins suffisamment robuste pour supporter les arbres et les moyens d'engrènement.

Selon une variante de l'invention, la boîte de transmission comprend deux butées de libération de frein solidaires de demi-coque inférieure et agencées en regard de ladite poulie de sorte que le basculement de ladite poulie dans l'une des deux positions en prise déplace le levier de frein dans ladite position libérée.

Selon cette variante, le levier de frein est par défaut en position freinée. Le basculement de la poulie vers une position en prise permet de libérer le frein.

Une boîte de transmission selon cette variante présente une sécurité renforcée étant donné qu'elle contribue à bloquer tout mouvement de l'équipement sur lequel la boîte est montée tant que l'utilisateur de l'équipement n'actionne pas l'embrayage, c'est-à-dire, le basculement de la poulie vers une position en prise.

Avantageusement et selon l'invention, au moins une desdites demi-coques comprend des moyens de réception et/ou de solidarisation d'un balancier portant ladite poulie. Ce balancier permet de faciliter le montage de la poulie sur le carter de manière pivotante.

L'invention concerne également un équipement automoteur de débroussaillage comprenant une boîte de transmission selon l'invention.

Une boîte de transmission peut également, dans une autre variante, être agencée entre le moteur et l'outil de coupe du équipement de débroussaillage, de manière à pouvoir entraîner l'outil de coupe en marche avant ou en marche arrière. Selon une autre variante, l'arbre de sortie de la boîte permet à la fois d'entraîner les moyens d'entraînement de l'équipement sur la surface à débroussailler et au moins un outil de coupe.

L'invention concerne également une boîte de transmission et un équipement équipé d'une telle boîte de transmission caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue schématique en perspective d'une boîte de transmission selon un mode de réalisation de l'invention,
- la figure 2 est une vue schématique en perspective d'une boîte de transmission selon un mode de réalisation de l'invention comprenant un arbre d'entrée équipé d'un disque d'entraînement de marche avant et d'un variateur de vitesses, et sur laquelle la demi-coque supérieure n'est pas représentée,
- la figure 3 est une vue schématique en perspective de la boîte de transmission de la figure 2 comprenant en outre un disque d'entraînement de marche arrière, et sur laquelle la demi-coque supérieure n'est pas représentée,
- la figure 4 est une vue schématique en perspective de la boîte de transmission de la figure 3 comprenant en outre un frein, et sur laquelle la demi-coque supérieure n'est pas représentée,
- la figure 5 est une vue de dessus de la boîte de transmission de la figure 3, et sur laquelle la demi-coque supérieure n'est pas représentée,
- la figure 6 est une vue de dessus d'une boîte de transmission selon un mode de réalisation de l'invention,
- la figure 7 est une vue schématique en perspective d'une demi-coque inférieure d'une boîte de transmission selon un mode de réalisation de l'invention,
- la figure 8 est une vue schématique en perspective d'une demi-coque supérieure d'une boîte de transmission selon un mode de réalisation de l'invention,
- la figure 9 est une vue schématique arrière d'une boîte de transmission selon un mode de réalisation de l'invention en position

débrayée,
- la figure 10 est une vue schématique arrière d'une boîte de transmission selon un mode de réalisation de l'invention en position de prise avant,
- la figure 11 est une vue schématique arrière d'une boîte de transmission selon un mode de réalisation de l'invention en position de prise arrière.

### 6. Description détaillée d'un mode de réalisation de l'invention

Sur les figures, les échelles et les proportions ne sont pas strictement respectées et ce à des fins d'illustration et de clarté.

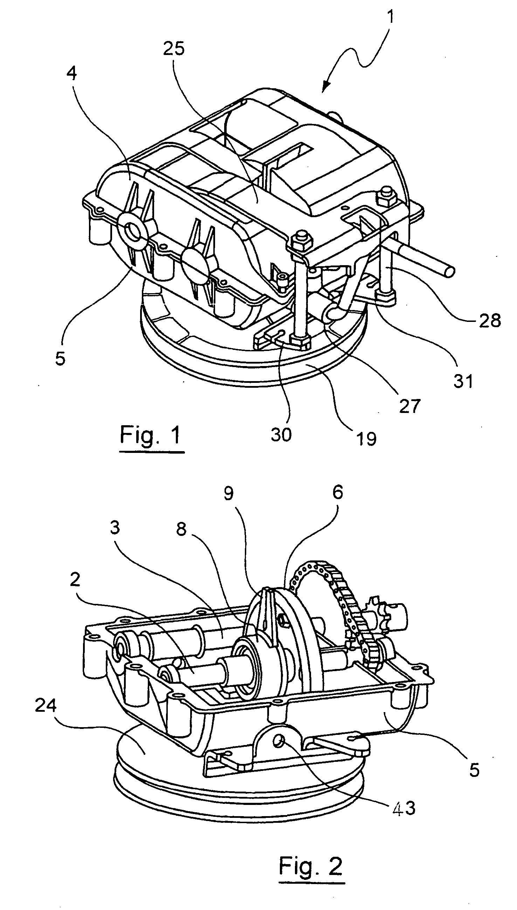

Dans toute la description détaillée qui suit en référence aux figures, sauf indication contraire, chaque pièce de la boîte de transmission est décrite telle qu'elle est agencée lorsque la boîte est montée sur un équipement automoteur de débroussaillage. Cet agencement est représenté notamment sur la figure 1.

Une boîte de transmission selon l'invention comprend un carter 1 formé de deux demi-coques 4, 5 agencées en regard l'une de l'autre de manière à former notamment un logement de réception d'un arbre 2 d'entrée.

Ce logement de réception présente une forme et des dimensions conformées et conjuguées à la forme et aux dimensions d'une pluralité de configurations distinctes possibles de l'arbre 2 d'entrée.

Selon le mode de réalisation des figures, quatre configurations distinctes sont possibles :
- (i) une configuration dans laquelle l'arbre d'entrée est équipé d'un disque d'entraînement en marche avant,
- (ii) une configuration dans laquelle l'arbre d'entrée est équipé d'un disque d'entraînement en marche avant et d'un variateur de vitesses,
- (iii) une configuration dans laquelle l'arbre d'entrée est équipé d'un disque d'entraînement en marche avant et d'un disque d'entraînement en marche arrière,
- (iv) une configuration dans laquelle l'arbre d'entrée est équipé d'un disque d'entraînement en marche avant, d'un variateur de vitesses, et d'un disque d'entraînement en marche arrière.

La figure 2 illustre la configuration (ii) dans laquelle l'arbre 2 d'entrée est équipé d'un disque 6 d'entraînement en marche avant et d'un variateur de vitesses. Le disque 6 d'entraînement en marche avant est un disque monté sur l'arbre 2 d'entrée de telle sorte qu'il ne puisse pas pivoter par rapport à l'arbre 2 d'entrée. Le variateur de vitesses comprend une couronne 8 solidaire du disque 6 d'entraînement en marche avant et une fourchette 9 radiale adaptée pour pouvoir être manoeuvrée par un opérateur pour déplacer le disque 6 d'entraînement en marche avant.

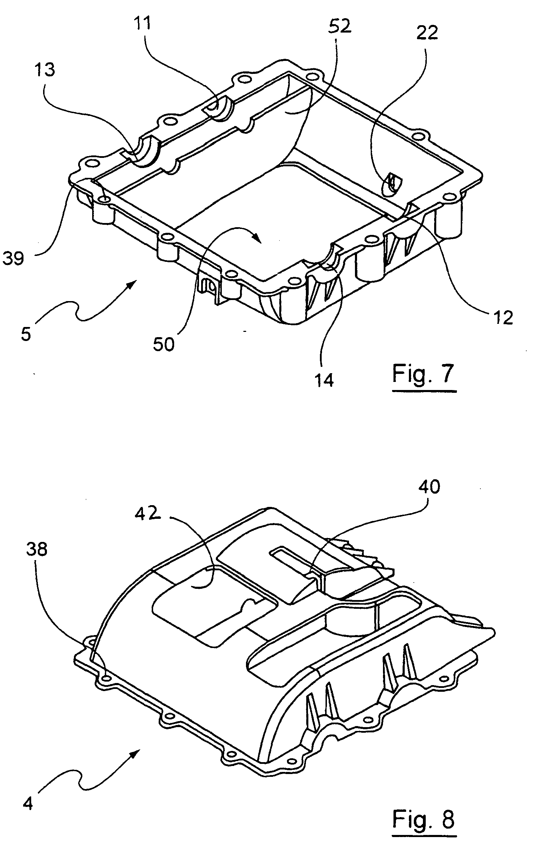

Sur la figure 2, la demi-coque supérieure n'est pas représentée à des fins de clarté. Cette demi-coque 4 supérieure qui est représentée sur la figure 8 présente une ouverture 40 à travers laquelle peut passer la partie supérieure de la fourchette 9 de commande de manière à ce qu'un utilisateur puisse actionner cette fourchette de commande.

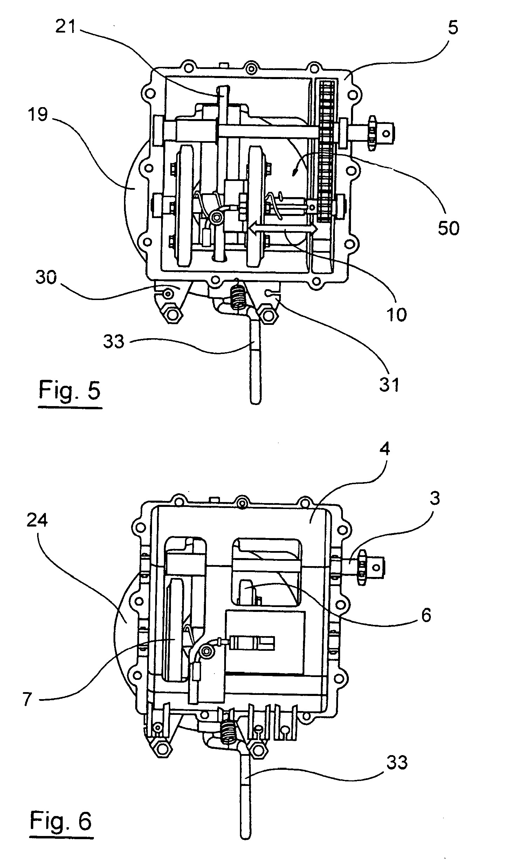

L'amplitude du déplacement du disque 6 d'entraînement en marche avant résultant de la commande de la fourchette 9 de commande est représenté sur la figure 5 par la flèche bidirectionnelle portant la référence 10.

L'actionnement de cette fourchette 9 de commande peut également être actionné par l'intermédiaire d'un câble de commande. Ce câble est selon un mode de réalisation logé en partie dans une zone de réception et de guidage d'une gaine portant ce câble de commande.

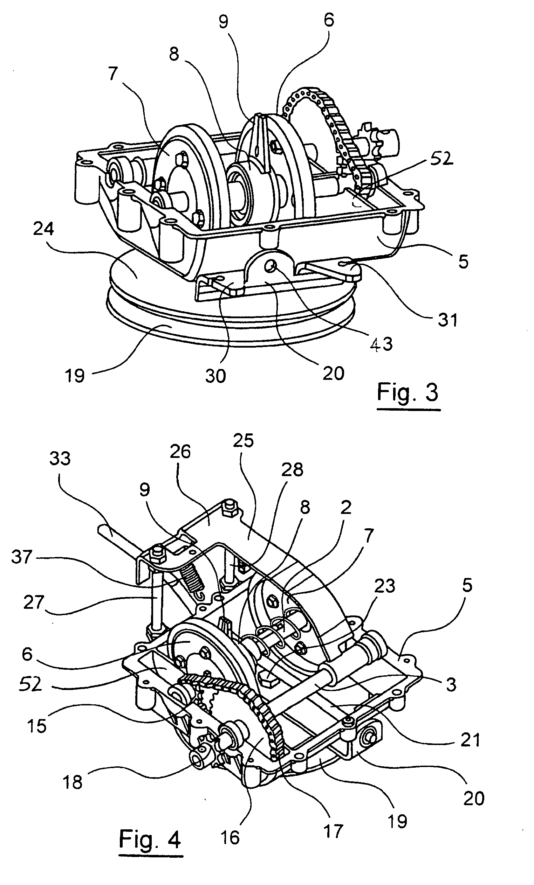

La figure 3 illustre la configuration (iv) dans laquelle l'arbre 2 d'entrée est équipé non seulement du disque 6 d'entraînement en marche avant et du variateur 8, 9 de vitesses, mais également d'un disque 7 d'entraînement en marche arrière. Ce disque présente les mêmes dimensions radiales que le disque 6 d'entraînement en marche avant et est également monté sur l'arbre 2 d'entrée de telle sorte qu'il ne puisse pas pivoter par rapport à l'arbre 2 d'entrée. Selon ce mode de réalisation, le disque 7 d'entraînement en marche arrière est également bloqué en translation par rapport à l'arbre 2 d'entrée. La demi-coque supérieure n'est pas représentée sur la figure 3 à des fins de clarté.

La forme et les dimensions du logement de réception de l'arbre 2 d'entrée formé par les demi-coques 4, 5 du carter de la boîte permettent de recevoir l'ensemble des configurations (i), (ii), (iii) et (iv) sans néanmoins imposer une modification de forme, de dimension, d'emplacement des autres organes de la boîte de transmission.

En particulier, une boîte selon l'invention comprend en outre un arbre 3 de sortie relié à l'arbre 2 d'entrée par l'intermédiaire de moyens d'engrènement.

L'arbre 3 de sortie et les moyens d'engrènement sont notamment représentés sur la figure 4.

L'arbre 3 de sortie est porté par demi-réceptacles formant des paliers 13, 14 ménagé dans la demi-coque 5 inférieure. L'arbre 2 d'entrée est porté par des paliers 11, 12 ménagés dans la demi-coque 5 inférieure. Les paliers 11, 12, 13, 14 sont ménagés de telle sorte que les arbres sont parallèles l'un à l'autre.

L'arbre 2 d'entrée comprend un pignon 15 denté agencé à une extrémité de l'arbre et l'arbre 3 de sortie comprend également un pignon 16 denté agencé sur l'arbre en regard du pignon 15 de l'arbre 2 de sorte qu'une chaîne 17 puisse reliée les pignons 15, 16 et ainsi transmettre le mouvement de rotation de l'arbre 2 d'entrée à l'arbre 3 de sortie.

Le rapport de transmission résultant du rapport entre le diamètre du pignon 16 de l'arbre 3 de sortie et le diamètre du pignon 15 de l'arbre 2 d'entrée peut être choisi selon les besoins. En particulier, il est aisé de changer le pignon 16 de l'arbre 2 de sortie sans imposer une modification des autres organes de la transmission. Dès lors, le rapport de transmission peut être modifié.

L'arbre 2 de sortie présente en outre à une extrémité un pignon 18 de sortie de boîte. Ce pignon 18 de sortie de boîte est destiné à être relié aux moyens d'entraînement de l'équipement de débroussaillage, qui sont par exemple des roues.

Tel que représenté notamment sur les figures 5 et 7, la demi-coque 5 inférieure présente une ouverture 50 à travers laquelle s'étend une portion périphérique du disque 6 d'entraînement en marche avant et du disque 7 d'entraînement en marche arrière.

En outre, une poulie 19 est montée pivotante sous la demi-coque 5 inférieure selon un axe diamétral de la poulie, en regard de ladite ouverture 50.

Le montage de la poulie 19 sur la demi-coque 5 est réalisé par l'intermédiaire d'un balancier 20. Ce balancier 20 présente une forme générale de U étiré dont les deux branches du U comprennent un alésage 43 en regard d'alésages 22 aménagé sur deux bords latéraux de le demi-coque 5 inférieure de manière à pouvoir y loger une tige 21 formant un axe de pivotement. Ainsi, le balancier 20 peut pivoter par rapport à la demi-coque 5 inférieure suivant l'axe de pivotement défini par la tige 21. En outre, le balancier 20 présente un alésage central vertical agencé à mi-distance entre les deux branches du U de manière à pouvoir recevoir un système du type vis écrou 23 pour solidariser la poulie 19 au balancier 20. Une fois la poulie 19 montée sur le balancier, lui-même monté pivotant sur la demi-coque 5, la poulie 19 s'étend dans un plan sensiblement parallèle à la direction de l'arbre 2 d'entrée.

La poulie 19 présente deux joues 24 et une gorge adaptée pour recevoir une courroie d'entraînement. La poulie 19 est adaptée pour être entraînée en rotation par des moyens moteurs du équipement de débroussaillage sur lequel la boîte de transmission selon l'invention est montée.

Selon un mode de réalisation avantageux de l'invention, la joue 24 supérieure en regard de la demi-coque 5 inférieure est légèrement tronconique de sorte que la distance entre la joue 24 et la demi-coque 5 inférieure est plus grande au niveau de la périphérie de la joue 24 qu'au centre de la joue 24.

La poulie 19 montée sur le balancier 20 est adaptée pour prendre au moins une position en prise avant, dans laquelle la joue 24 joue supérieure de la poulie entraîne en rotation par friction la portion périphérique du disque 6 d'entraînement en marche avant s'étendant à travers l'ouverture 50. Cette position correspond à un pivotement du balancier 20 vers le disque 6 d'entraînement en marche avant.

La poulie 19 est également adaptée pour prendre une position en prise arrière dans laquelle la joue 24 joue supérieure de la poulie entraîne en rotation par friction la portion périphérique du disque 7 d'entraînement en marche arrière s'étendant à travers l'ouverture 50. Cette position correspond à un pivotement du balancier 20 vers le disque 7 d'entraînement en marche arrière.

Pour améliorer la friction entre la joue 24 supérieure de la poulie 19 et les disques 6, 7 d'entraînement, chaque disque comprend un revêtement périphérique en caoutchouc. Selon un autre mode de réalisation, ce revêtement est faite en EPDM.

Lorsque la poulie 19 n'est basculée ni du côté du disque 6 d'entraînement en marche avant, ni du côté du disque 7 d'entraînement en marche arrière, la poulie 19 est dans une position débrayée dans laquelle l'arbre 2 d'entrée n'est pas entraîné en rotation.

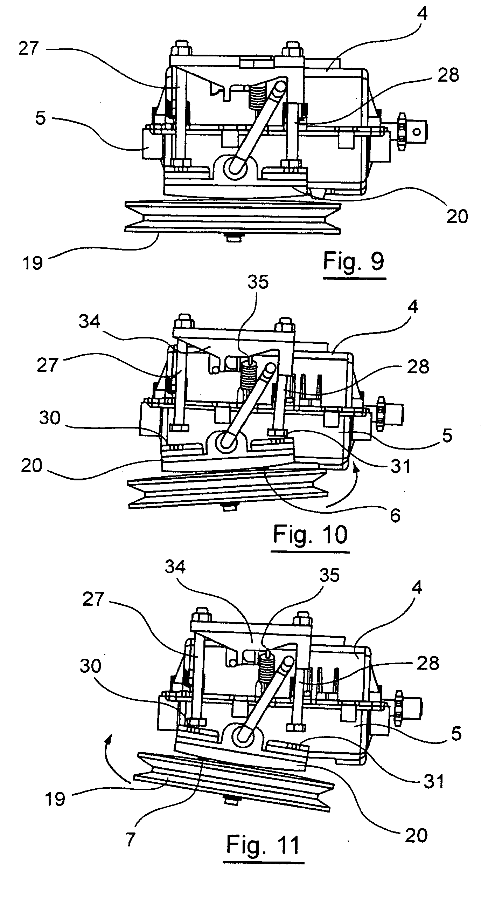

La figure 9 illustre la boîte de transmission dans la position débrayée.

La figure 10 illustre la boîte de transmission dans la position en prise avant. En particulier, le disque 6 d'entraînement en marche avant est en contact avec la joue 24 supérieure de la poulie 19 si bien que le mouvement rotatif reçue par la poulie 19 en provenance de moyens moteurs non représentés sur la figure, est retransmis au disque 6 par friction. Sur la figure 10, seule l'extrême périphérie du disque 6 d'entraînement est visible.

La figure 11 illustre la boîte de transmission dans la position en prise arrière. Le balancier 20 est basculé du côté opposé par rapport à la figure 10. Sur la figure 11, seule l'extrême périphérie du disque 7 d'entraînement en marche arrière est visible.

Selon un mode de réalisation avantageux de l'invention et tel que représenté notamment sur les figures 1 et 4, la boîte de transmission est équipé d'un levier 25 de frein courbe monté pivotant autour de l'axe 3 de sortie.

Ce levier s'étend au-delà de l'arbre 2 d'entrée de sorte à pouvoir occuper une position, dite position freinée, dans laquelle le levier 25 est en appui sur le disque 7 d'entraînement de marche arrière au niveau de la courbure du levier pour bloquer toute rotation de l'arbre 2 d'entrée. De préférence, la courbure du levier est sensiblement égale à la courbure du disque 7 de sorte qu'une fois en appui, la surface de contact entre le levier et le disque 7 soit la plus grande possible.

Le levier peut également être pivoté autour de l'axe 3 de sortie auquel il est relié pour pouvoir occuper une position, dite position libérée, dans laquelle ledit levier est éloigné du disque 7 d'entraînement de marche arrière de manière à autoriser la rotation de l'arbre 2 d'entrée.

Le maintien du levier 25 de frein dans la position freinée est assuré par un ressort 37 agencé entre le levier 25 de frein et la demi-coque 4 supérieure. Ainsi, le levier de frein est dans la position freinée par défaut. Seule une action sur ce levier de frein, comme décrit ci-après, permet de le déplacer de la position freinée à la position libérée.

Ce levier 25 de frein présente une aile 26 agencée à l'extrémité opposée de la liaison pivot avec l'arbre 3 de sortie. Cette aile 26 s'étend dans un plan sensiblement horizontal et parallèle au plan de la poulie 19. Cette aile 26 maintient en outre deux entretoises 27, 28 métalliques qui s'étendent dans un plan sensiblement perpendiculaire au plan de l'aile 26. Ces entretoises 27, 28 s'étendent entre l'aile 26 du levier 25 de frein et le balancier 20. En particulier, le balancier 20 comprend deux ailettes 30, 31 qui s'étendent dans un plan horizontal perpendiculaire aux entretoises 27, 28. Ainsi, dans la position débrayée, les entretoises s'étendent exactement entre l'aile 26 et les ailettes 30, 31. Ces ailettes 30, 31 forment des butées de libération de frein. En particulier, lorsque le balancier bascule sur un côté, par exemple sur le côté de la marche avant tel que représenté sur la figure 10, l'ailette 31 vient pousser sur l'entretoise 28 agencée en regard, ce qui entraîne le déplacement du levier de frein de la position freinée à une position libérée.

De même, lorsque le balancier bascule de l'autre côté, tel que représenté sur la figure 11, l'ailette 30 vient pousser sur l'entretoise 27 agencée en regard, ce qui entraîne également le déplacement du levier de frein de la position freinée à une position libérée.

Selon un mode de réalisation avantageux, la boîte de transmission comprend également une poignée 33 de manoeuvre du levier 35 de frein pour le déplacer manuellement de la position freinée à la position libérée et inversement.

Selon le mode de réalisation des figures, la poignée de manoeuvre est montée pivotante selon un axe coïncidant avec l'axe de la tige 21 de pivotement du balancier 20. Cette poignée 33 de manoeuvre présente en outre une portion adaptée pour venir en contact avec le levier 25 de frein pour permettre de le déplacer de la position freinée à la position libérée.

Pour ce faire, l'aile 26 du levier 25 de frein est prolongée par un retour 34, représenté notamment sur les figures 9 et 10, s'étendant dans un plan perpendiculaire au plan de l'aile 26. Le retour 34 présente un bord formant deux renfoncements adjacents séparés par une protubérance 35. La forme des renfoncements et les dimensions de la poignée sont adaptées pour permettre, lorsque la poignée est logée dans le premier renfoncement de ne pas agir sur le retour 34. Dans cette position, le levier 25 de frein est donc dans la position freinée. Lorsque la poignée est déplacée dans le second renfoncement en passant la protubérance 35, la poignée agit sur le retour 34 en le poussant vers le haut de sorte que le levier 25 de frein passe dans la position libérée. Cette position est maintenue par la protubérance 35 qui empêche un retour spontané de la poignée dans le premier renfoncement.

Les demis-coques 4, 5 illustrées sur les figures 7 et 8 comprennent en outre chacune une aile périphérique comportant des alésages agencés de sorte à être en regard des alésages 38, 39 de la demi-coque en regard pour pouvoir y ménager des moyens de fixation du type vis écrou ou vis insert.

La demi-coque 5 inférieure comprend en outre un logement de propreté destiné à recevoir lesdits moyens 15, 16, 17 d'engrènement, défini par un bord intérieur de ladite demi-coque 5 inférieure, une première demi-cloison 52 s'étendant sensiblement perpendiculairement aux arbres 2, 3 et une portion de fond reliant ladite cloison et ledit bord intérieur.

La demi-coque 4 supérieure comprend une seconde demi-cloison 42 complémentaire de ladite première demi-cloison 52, de façon à fermer ledit logement de propreté. Ce logement de propreté permet d'isoler les moyens d'engrènement des autres organes de la transmission.

L'invention ne se limite pas aux seuls modes de réalisation décrits. En particulier, la boîte de transmission peut être configurée de sorte à recevoir d'autres configurations de l'arbre d'entrée, par exemple un variateur de vitesses de la marche arrière.

Une boîte de transmission selon l'invention peut être montée sur tous types d'équipement de débroussaillage, tel qu'un véhicule de débroussaillage, un équipement à conducteur marchant ou un dispositif analogue.

## Revendications

1. Boite de transmission pour équipement agricole automoteur de débroussaillage comprenant des moyens d'entraînement de l'équipement sur une surface à débroussailler, ladite boîte de transmission comprenant :
- un carter coopérant avec une poulie (19) adaptée pour être entraînée en rotation par des moyens moteurs,
- un arbre (2) d'entrée adapté pour être entraîné en rotation par lesdits moyens moteurs,
- un arbre (3) de sortie,
- des moyens (15, 16, 17) d'engrènement agencés entre l'arbre (2) d'entrée et l'arbre (3) de sortie de sorte qu'une rotation de l'arbre (2) d'entrée engendre une rotation de l'arbre (3) de sortie,
ledit carter étant formé de deux demi-coques,
agencées en regard l'une de l'autre et définissant un logement de réception de l'arbre (2) d'entrée, ledit logement de réception présentant une forme et des dimensions conformées et conjuguées à la forme et aux dimensions d'au moins trois configurations distinctes de l'arbre (2) d'entrée :
- une configuration dans laquelle l'arbre (2) d'entrée est équipé d'un disque (6) d'entraînement de marche avant,
- une configuration dans laquelle l'arbre (2) d'entrée est équipé d'un disque (6) d'entraînement de marche avant et d'un variateur (8, 9) de vitesse,
- une configuration dans laquelle l'arbre (2) d'entrée est équipé d'un disque (6) d'entraînement de marche avant et d'un disque (7) d'entraînement de marche arrière, **caractérisée en ce que** ladite poulie est montée pivotante par rapport audit carter, selon un axe diamétral de la poulie (19) et **en ce que** le carter est formé d'une demi-coque (5) inférieure et d'une demi-coque (4) supérieure.

2. Boite de transmission selon la revendication 1, **caractérisé en ce que** lesdites demi-coques présentent un plan de jonction parallèle à l'arbre d'entrée.

3. Boite de transmission selon l'une des revendications 1 ou 2, **caractérisé en ce que** l'arbre de sortie est relié auxdits moyens d'entraînement dudit équipement sur la surface à débroussailler.

4. Boîte de transmission selon l'une des revendications 1 à 3 , **caractérisée en ce qu'**elle comprend un disque (6) d'entraînement de marche avant et un disque (7) d'entraînement de marche arrière montés sur ledit arbre (2) d'entrée, chaque disque (6 ; 7) d'entraînement étant solidaire en rotation dudit arbre (2) d'entrée et pouvant être entraîné en rotation par l'intermédiaire de ladite poulie (19).

5. Boîte de transmission selon la revendication 4, **caractérisée en ce que** ladite demi-coque (5) inférieure présente une ouverture (50) à travers laquelle s'étend une portion périphérique de chaque disque (6 ; 7) d'entraînement,
et **en ce que** ladite poulie (19) est montée pivotante sous ladite demi-coque (5) inférieure en regard de ladite ouverture (50), ladite poulie (19) étant adaptée pour prendre :
- au moins une position, dite position en prise, dans laquelle une joue (24) supérieure de la poulie (19) entraîne en rotation par friction la portion périphérique d'un disque (6 ; 7) d'entraînement s'étendant à travers ladite ouverture (50),
- une position, dite position débrayée, dans laquelle la poulie (19) tourne dans le vide.

6. Boîte de transmission selon la revendication 5, **caractérisée en ce que** ladite poulie (19) est montée pivotante sous la demi-coque (5) inférieure de sorte que ladite liaison pivot est agencée entre les disques (6) d'entraînement de marche avant et (7) de marche arrière et **en ce qu'**elle présente deux positions en prise :
- une première position en prise, dite prise avant, dans laquelle elle est basculée sur un premier côté pour pouvoir entraîner en rotation par friction ledit disque (6) d'entraînement de marche avant,
- une seconde position en prise, dite prise arrière, dans laquelle elle est basculée sur le côté opposé par rapport à l'axe du pivot, pour pouvoir entraîner en rotation par friction ledit disque (7) d'entraînement de marche arrière.

7. Boîte de transmission selon l'une des revendications 4 à 6, **caractérisée en ce qu'**elle comprend un variateur (8, 9) de vitesses comprenant une couronne (8) solidaire du disque (6) d'entraînement en marche avant et une fourchette (9) radiale s'étendant à travers une ouverture (40) ménagée dans ladite demi-coque (4) supérieure de manière à pouvoir être manoeuvrée par un opérateur pour déplacer ledit disque (6) d'entraînement en marche avant le long d'une portion de l'arbre (2) d'entrée.

8. Boîte de transmission selon la revendication 7, **caractérisée en ce que** ladite demi-coque supérieure comprend une zone de réception et/ou de guidage d'une gaine portant un câble de commande du variateur (8, 9) de vitesses.

9. Boîte de transmission selon l'une des revendications 4 à 8, **caractérisée en ce qu'**elle comprend un levier (25) de frein courbe monté pivotant autour dudit arbre (3) de sortie et s'étendant au-delà de l'arbre (2) d'entrée de sorte à pouvoir occuper :
- une position, dite position freinée, dans laquelle ledit levier (25) est en appui sur ledit disque (7) d'entraînement de marche arrière au niveau de sa courbure de manière à bloquer toute rotation de l'arbre (2) d'entrée,
- une position, dite position libérée, dans laquelle ledit levier (25) est éloigné dudit disque (7) d'entraînement de marche arrière de manière à autoriser la rotation de l'arbre (2) d'entrée.

10. Boite de transmission selon la revendication 9, **caractérisée en ce qu'**elle comprend une poignée (33) de manoeuvre du frein adaptée pour permettre un déplacement manuel du levier de frein de ladite position freinée à ladite position libérée et inversement.

11. Boîte de transmission selon les revendications 6 et 9 prises ensemble, **caractérisée en ce qu'**elle comprend deux butées (30, 31) de libération de frein solidaires de ladite demi-coque (5) inférieure et agencées en regard de ladite poulie (19) de sorte qu'un pivotement de ladite poulie (19) dans l'une des deux positions en prise déplace ledit levier (25) frein dans ladite position libérée.

12. Boîte de transmission selon l'une des revendications 1 à 11, **caractérisée en ce que** lesdits arbres (2) d'entrée et de (3) sortie sont parallèles.

13. Boîte de transmission selon l'une des revendications 1 à 12, **caractérisée en ce que** lesdites demi-coques (4, 5) sont en plastique injecté.

14. Boîte de transmission selon l'une quelconque des revendications 1 à 13, **caractérisée en ce qu'**au moins une desdites demi-coques comprend des moyens de réception et/ou de solidarisation d'un balancier (20) portant ladite poulie (19).

15. Boîte de transmission selon l'une des revendications 1 à 14, **caractérisée en ce que** ladite demi-coque (5) inférieure présente :
- quatre demi-réceptacles (11, 12, 13, 14) de portées de roulements, associés respectivement à l'un desdits arbres ;
- un logement de propreté destiné à recevoir lesdits moyens (15, 16, 17) d'engrènement, défini par un bord intérieur de ladite demi-coque (5) inférieure, une première demi-cloison (52) s'étendant sensiblement perpendiculairement aux arbres (2, 3) et une portion de fond reliant ladite cloison et ledit bord intérieur,
et **en ce que** ladite demi-coque (4) supérieure présente :
- quatre demi-réceptacles de portées de roulements, associés respectivement à l'un desdits arbres ;
- une seconde demi-cloison (42) complémentaire de ladite première demi-cloison (52), de façon à fermer ledit logement de propreté.

16. Équipement automoteur de débroussaillage **caractérisé en ce qu'**il comprend une boîte de transmission selon l'une des revendications 1 à 15.

## Patentansprüche

1. Getriebe für selbstangetriebene Ackerfräse, die Mittel zum Antreiben der Ausrüstung auf einer zu entbuschenden Oberfläche aufweist, wobei das Getriebe Folgendes aufweist:
- ein Gehäuse, das mit einer Scheibe (19) zusammenwirkt, die angepasst ist, um von Antriebsmitteln in Drehung angetrieben zu werden,
- eine Eingangswelle (2), die angepasst ist, um von den Antriebsmitteln in Drehung angetrieben zu werden,
- eine Ausgangswelle (3),
- Mittel (15, 16, 17) zum Eingreifen, die zwischen der Eingangswelle (2) und der Ausgangswelle (3) derart eingerichtet sind, dass eine Drehung der Eingangswelle (2) eine Drehung der Ausgangswelle (3) bewirkt,
wobei das Gehäuse aus zwei Halbschalen gebildet ist, die einander gegenüber liegend angeordnet sind und eine Aufnahme der Eingangswelle (2) bilden, wobei die Aufnahme eine Form und Maße aufweist, die an die Form und die Maße von mindestens drei getrennten Konfigurationen der Eingangswelle (2) angepasst ausgebildet und zugeordnet sind:
- eine Konfiguration, in der die Eingangswelle (2) mit einer Vorwärtsgang-Antriebsscheibe (6) versehen ist,
- eine Konfiguration, in der die Eingangswelle (2) mit einer Vorwärtsgang-Antriebsscheibe (6) und einem Drehzahlwandler (8, 9) ausgerüstet ist,
- eine Konfiguration, in der die Eingangswelle (2) mit einer Vorwärtsgang-Antriebsscheibe (6) und einer Rückwärtsgang-Antriebsscheibe (7) ausgerüstet ist, **dadurch gekennzeichnet, dass** die Scheibe in Bezug zu dem Gehäuse entlang einer Achse diametral zu der Scheibe (19) schwenkend montiert ist, und dass das Gehäuse aus einer unteren Halbschale (5) und einer oberen Halbschale (4) ausgebildet ist.

2. Getriebe nach Anspruch 1, **dadurch gekennzeichnet, dass** die Halbschalen eine Verbindungsebene parallel zu der Eingangswelle aufweisen.

3. Getriebe nach einem der Ansprüche 1 oder 2, **dadurch gekennzeichnet, dass** die Ausgangswelle mit den Antriebsmitteln der Ausrüstung auf der zu entbuschenden Oberfläche verbunden ist.

4. Getriebe nach einem der Ansprüche 1 bis 3, **dadurch gekennzeichnet, dass** sie eine Vorwärtsgang-Antriebsscheibe (6) und eine Rückwärtsgang-Antriebsscheibe (7) aufweist, die auf die Eingangswelle (2) montiert sind, wobei jede Antriebsscheibe (6; 7) in Drehung fest mit der Eingangswelle (2) verbunden ist und in Drehung über die Scheibe (19) angetrieben werden kann.

5. Getriebe nach Anspruch 4, **dadurch gekennzeichnet, dass** die untere Halbschale (5) eine Öffnung (50) aufweist, durch die sich ein umfänglicher Teil jeder Antriebsscheibe (6; 7) erstreckt,
und dass die Scheibe (19) schwenkend auf die untere Halbschale (5) gegenüber der Öffnung (50) montiert ist, wobei die Scheibe (19) angepasst ist, um:
- mindestens eine Position, Eingriffsposition genannt, einzunehmen, in der eine obere Backe (24) der Scheibe (19) den umfänglichen Teil einer Antriebsscheibe (6; 7), der sich durch die Öffnung (50) erstreckt, durch Reibung in Drehung antreibt,
- eine Position, ausgerückte Position genannt, einzunehmen, in der die Scheibe (19) leer dreht.

6. Getriebe nach Anspruch 5, **dadurch gekennzeichnet, dass** die Scheibe (19) unter der unteren Halbschale (5) derart schwenkend montiert ist, dass die Schwenkverbindung zwischen der Vorwärtsgang-Antriebsscheibe (6) und der Rückwärtsgang-Antriebsscheibe (7) eingerichtet ist und dass sie zwei Eingriffspositionen aufweist:
- eine erste Eingriffsposition, vorderer Eingriff genannt, in der sie auf eine erste Seite gekippt wird, um durch Reibung die Vorwärtsgang-Antriebsscheibe (6) in Drehung antreiben zu können,
- eine zweite Eingriffsposition, hinterer Eingriff genannt, in der sie auf die entgegengesetzte Seite in Bezug zu der Achse des Schwenkers gekippt wird, um durch Reibung die Rückwärtsgang-Antriebsscheibe (7) in Drehung antreiben zu können.

7. Getriebe nach einem der Ansprüche 4 bis 6, **dadurch gekennzeichnet, dass** es einen Drehzahlwandler (8, 9) aufweist, der einen Kranz (8) aufweist, der mit der Vorwärtsgang-Antriebsscheibe (6) fest verbunden ist, und eine radiale Gabel (9), die sich durch eine Öffnung (40) erstreckt, die in der oberen Halbschale (4) derart eingerichtet ist, dass sie von einem Bediener betätigt werden kann, um die Vorwärtsgang-Antriebsscheibe (6) entlang eines Teils der Eingangswelle (2) zu verschieben.

8. Getriebe nach Anspruch 7, **dadurch gekennzeichnet, dass** die obere Halbschale einen Aufnahme- und/oder Führungsbereich einer Hülse, die ein Steuerkabel des Drehzahlwandlers (8, 9) trägt, aufweist.

9. Getriebe nach einem der Ansprüche 4 bis 8, **dadurch gekennzeichnet, dass** es einen gebogenen Bremshebel (25) aufweist, der um die Ausgangswelle (3) schwenkend montiert ist und sich über die Eingangswelle (2) hinaus derart erstreckt, dass er:
- eine erste Position, gebremste Position genannt, einnehmen kann, in der der Hebel (25) auf der Rückwärtsgang-Antriebsscheibe (7) auf dem Niveau ihrer Krümmung derart aufliegt, dass jede Drehung der Eingangswelle (2) blockiert ist,
- eine Position, freigegebene Position genannt, einnehmen kann, in der der Hebel (25) von der Rückwärtsgang-Antriebsscheibe (7) derart beabstandet ist, dass das Drehen der Eingangswelle (2) gestattet ist.

10. Getriebe nach Anspruch 9, **dadurch gekennzeichnet, dass** es einen Bedienungsgriff (33) der Bremse aufweist, der angepasst ist, um ein manuelles Verlagern des Bremshebels von der gebremsten Position zu der freigegebenen Position und umgekehrt zu erlauben.

11. Getriebe nach den Ansprüchen 6 und 9, gemeinsam genommen, **dadurch gekennzeichnet, dass** es zwei Anschläge (30, 31) zum Bremsenlösen aufweist, die mit der unteren Halbschale (5) fest verbunden und gegenüber der Scheibe (19) derart eingerichtet sind, dass ein Schwenken der Scheibe (19) in einer der zwei Eingriffspositionen den Bremshebel (25) in die freigegebene Position verlagert.

12. Getriebe nach den Ansprüchen 1 bis 11, **dadurch gekennzeichnet, dass** die Eingangswelle (2) und die Ausgangswelle (3) parallel sind.

13. Getriebe nach einem der Ansprüche 1 bis 12, **dadurch gekennzeichnet, dass** die Halbschalen (4, 5) aus Spritzgusskunststoff bestehen.

14. Getriebe nach einem der Ansprüche 1 bis 13, **dadurch gekennzeichnet, dass** mindestens eine der Halbschalen Mittel zum Aufnehmen und/oder zum festen Verbinden eines Schwinghebels (20), der die Scheibe (19) trägt, aufweist.

15. Getriebe nach einem der Ansprüche 1 bis 14, **dadurch gekennzeichnet, dass** die untere Halbscheibe (5) Folgendes aufweist:
- vier Halbaufnahmen (11, 12, 13, 14) von Lagerauflagen, die jeweils einer der Wellen zugewiesen sind;
- eine Sauberkeitsaufnahme, die dazu bestimmt ist, die Eingriffsmittel (15, 16, 17) aufzunehmen, die von einem Innenrand der unteren Halbschale (5) definiert ist, wobei sich eine erste Halbwand (52) im Wesentlichen senkrecht zu den Wellen (2, 3) erstreckt, und ein Bodenteil die Wand und den unteren Rand verbindet,
und dass die obere Halbschale (4) Folgendes aufweist:
- vier Halbaufnahmen von Lagerauflagen, die jeweils einer der Wellen zugewiesen sind;
- eine zweite Halbwand (42), die zu der ersten Halbwand (52) derart komplementär ist, dass die Sauberkeitsaufnahme geschlossen wird.

16. Selbstfahrende Ackerfräse, **dadurch gekennzeichnet, dass** sie ein Getriebe nach einem der Ansprüche 1 bis 15 aufweist.

## Claims

1. Gearbox for self-propelled agricultural brush-cutting equipment comprising means for driving the equipment on a surface to be cleared, the said gearbox comprising:
- a casing cooperating with a pulley (19) adapted to be rotationally driven by motor means,
- an input shaft (2) adapted to be rotationally driven by the said motor means,
- an output shaft (3),
- gear means (15, 16, 17) arranged between the input shaft (2) and the output shaft (3) so that a rotation of the input shaft (2) causes a rotation of the output shaft (3),
the said casing is formed of two half-shells arranged opposite one another and defining a receiving housing for receiving the input shaft (2), the said receiving housing having a shape and dimensions conformed to and matching the shape and dimensions of at least three different configurations of the input shaft (2):
- a configuration in which the input shaft (2) is equipped with a forward gear driving disc (6),
- a configuration in which the input shaft (2) is equipped with a forward gear driving disc (6) and a variable speed drive (8, 9),
- a configuration in which the input shaft (2) is equipped with a forward gear driving disc (6) and a reverse gear driving disc (7),
**characterised in that** the said pulley is mounted pivotably with respect to the said casing, along a diametrical axis of the pulley (19), and **in that** the casing is formed of a lower half-shell (5) and an upper half-shell (4).

2. Gearbox according to Claim 1, **characterised in that** the said half-shells have a joining plane parallel to the input shaft.

3. Gearbox according to one of Claims 1 and 2, **characterised in that** the output shaft is connected to the said means for driving the said equipment on the surface to be cleared.

4. Gearbox according to one of Claims 1 to 3, **characterised in that** it comprises a forward gear driving disc (6) and a reverse gear driving disc (7) which are mounted on the said input shaft (2), each driving disc (6 ; 7) being rotationally fixed to the said input shaft (2) and rotationally drivable via the said pulley (19).

5. Gearbox according to Claim 4, **characterised in that** the said lower half-shell (5) has an opening (50) through which extends a peripheral portion of each driving disc (6 ; 7),
and **in that** the said pulley (19) is mounted pivotably below the said lower half-shell (5) opposite the said opening (50), the said pulley (19) being adapted to assume:
- at least one position, called the engaged position, in which an upper cheek (24) of the pulley (19) rotationally frictionally drives the peripheral portion of a driving disc (6 ; 7) extending through the said opening (50),
- a position, called the disengaged position, in which the pulley (19) turns idly.

6. Gearbox according to Claim 5, **characterised in that** the said pulley (19) is mounted pivotably below the lower half-shell (5) so that the said pivot joint is arranged between the forward gear driving disc (6) and the reverse gear driving disc (7) and **in that** it has two engaged positions:
- a first engaged position, called the forward engaged position, in which it is tilted to a first side in order to be able to rotationally frictionally drive the said forward gear driving disc (6),
- a second engaged position, called the reverse engaged position, in which it is tilted to the opposite side with respect to the pivot axis, in order to be able to rotationally frictionally drive the said reverse gear driving disc (7).

7. Gearbox according to one of Claims 4 to 6, **characterised in that** it comprises a variable speed drive (8, 9) comprising a ring (8) integral with the forward gear driving disc (6), and a radial fork (9) extending through an opening (40) provided in the said upper half-shell (4) so as to be operable by an operator to displace the said forward gear driving disc (6) along a portion of the input shaft (2).

8. Gearbox according to Claim 7, **characterised in that** the said upper half-shell comprises a zone for receiving and/or guiding a sheath carrying a cable for controlling the variable speed drive (8, 9).

9. Gearbox according to one of Claims 4 to 8, **characterised in that** it comprises a curved brake lever (25) mounted pivotably about the said output shaft (3) and extending beyond the input shaft (2) so as to be able to occupy:
- a position, called the braked position, in which the said lever (25) bears on the said reverse gear driving disc (7) at its curvature so as to block any rotation of the input shaft (2),
- a position, called the released position, in which the said lever (25) is remote from the said reverse gear driving disc (7) so as to allow the rotation of the input shaft (2).

10. Gearbox according to Claim 9, **characterised in that** it comprises a brake operating handle (33) adapted to permit a manual displacement of the brake lever from the said braked position to the said released position and vice versa.

11. Gearbox according to Claims 6 and 9 taken together, **characterised in that** it comprises two brake release stops (30, 31) which are integral with the said lower half-shell (5) and arranged opposite the said pulley (19) so that a pivoting of the said pulley (19) in one of the two engaged positions displaces the said brake lever (25) into the said released position.

12. Gearbox according to one of Claims 1 to 11, **characterised in that** the said input shaft (2) and output shaft (3) are parallel.

13. Gearbox according to one of Claims 1 to 12, **characterised in that** the said half-shells (4, 5) are made of injection-moulded plastic.

14. Gearbox according to any one of Claims 1 to 13, **characterised in that** at least one of the said half-shells comprises means for receiving and/or securing a rocker (20) carrying the said pulley (19).

15. Gearbox according to one of Claims 1 to 14, **characterised in that** the said lower half-shell (5) has:
- four rolling bearing half-receptacles (11, 12, 13, 14), respectively associated with one of the said shafts;
- a clean housing intended to receive the said gear means (15, 16, 17), and defined by an inner border of the said lower half-shell (5), a first half-partition (52) extending substantially perpendicularly to the shafts (2, 3) and a bottom portion connecting the said partition and the said inner border,
and **in that** the said upper half-shell (4) has:
- four rolling bearing half-receptacles, respectively associated with one of the said shafts;
- a second half-partition (42) complementary with the said first half-partition (52), so as to close the said clean housing.

16. Self-propelled brush-cutting equipment **characterised in that** it comprises a gearbox according to one of Claims 1 to 15.
